# EUROPÄISCHE PATENTSCHRIFT

(11) **EP 2 950 500 B1**
(45) Veröffentlichungstag und Bekanntmachung des Hinweises auf die Patenterteilung: **25.05.2016**
(21) Anmeldenummer: 14170617.6
(22) Anmeldetag: 30.05.2014
(51) Int. Cl.: H04L 29/06

(54) **Verfahren und System zum Aufbau von Echtzeit-Audioverbindungen**
Method and system for setting up real time audio connections
Procédé et système d'établissement de liaisons audio en temps réel

(43) Veröffentlichungstag der Anmeldung: 02.12.2015
(73) Patentinhaber: LINEAPP GmbH, 1070 Wien (AT)
(72) Erfinder: Steiner, Lukas, 9710 Feistritz/Drau (AT); Nell, Luis Martin, 1160 Wien (AT); Kränkl, A, Ing., 1060 Wien (AT)
(74) Vertreter: Patentanwälte Pinter & Weiss OG

(56) Entgegenhaltungen:
- US-A1- 2007 054 687
- US-A1- 2013 109 425

## Beschreibung

Die Erfindung betrifft ein Verfahren zur Bereitstellung selektiv wählbarer Echtzeit-Audioverbindungen zwischen einer ausführenden Kommunikationseinheit und einer Anzahl an weiteren Kommunikationseinheiten in einer Kommunikationsgruppe, wobei zumindest die ausführende Kommunikationseinheit eine Anzahl an durch Benutzerauswahl aktivierbaren Aktivierungselementen zur selektiven Aktivierung von Echtzeit-Audioverbindungen zwischen der ausführenden Kommunikationseinheit und zumindest einer weiteren Kommunikationseinheit, die dem jeweiligen Aktivierungselement zugeordneten ist, vorsieht. Weiters betrifft die Erfindung ein Echtzeit-Audiokommunikationssystem mit einer Vielzahl an Kommunikationseinheiten, welche jeweils zumindest eine Kommunikationsschnittstelle zur Verbindung mit dem Datennetzwerk und eine Audioausgabe aufweisen.

Die eingangs genannten Verfahren werden im Stand der Technik von Intercom-Systemen durchgeführt, die beispielsweise bei der Eventorganisation und bei der Organisation von Sportveranstaltungen verwendet werden. Intercom-Systeme werden zunehmend auch bei Filmproduktionen eingesetzt, und erleichtern die Arbeit für Regisseure und die Produktionsteams um ein Vielfaches. Aufgrund der hohen Kosten für die Miete und den Aufbau professioneller Intercom-Systeme ist ein Einsatz bei kleineren Produktionen oder im Hobbybereich derzeit kaum möglich. Dies liegt darin, dass das technische Equipment nur von wenigen Anbietern bereitgestellt wird, deren Kerngeschäft vor allem in der Vermietung der Systeme und dem Anbieten von Serviceleistungen für große Events liegt. Veranstalter kleinerer Events können sich diese Systeme meist nicht leisten. Der Grund dafür liegt darin, dass die Sprechstellen über Glasfaserkabel miteinander vernetzt werden müssen und oft kilometerlange Kabelwege verlegt werden müssen, was nur von qualifiziertem Personal mit einem erheblichen Zeitaufwand ausgeführt werden kann.

Die US 2013/0109425 offenbart Verfahren und Systeme zur Gruppenkommunikation zwischen unterschiedlichen Geräten über ein Mobiltelekommunikationsnetz, wobei eine Push-To-Talk-Funktionalität beschrieben wird, bei der immer genau ein gerade aktives Gerät sprechen kann, während die anderen Geräte passiv zuhören.

US 2007/0054687 A1 offenbart ein Verfahren zur dynamischen Erstellung und Verwaltung von Kommunikationsgruppen für eine Push-To-Talk-Kommunikation zwischen Mobilen Geräten, die in einem Mobiltelefonnetz operieren.

Es ist das Ziel der gegenständlichen Erfindung, ein Verfahren und ein System der eingangs genannten Art bereitzustellen, die die Nachteile des Standes der Technik vermeiden. Insbesondere sollen die Kosten, der technische Aufwand und die Zeit, die für die Bereitstellung eines Intercom-Systems erforderlich sind, so stark verringert werden, dass diese Anwendungen nicht nur für Großveranstaltungen sondern auch für kleine Events, Projekte und Unternehmen oder auch für den privaten Gebrauch erschwinglich werden.

Das eingangs genannte erfindungsgemäße Verfahren erreicht diese und andere Ziele dadurch, dass die ausführende Kommunikationseinheit die folgenden Schritte ausführt:
- Herstellen einer Verbindung mit einem Datennetzwerk;
- Ermitteln von weiteren Kommunikationseinheiten, die sich im Bereich des Datennetzwerks befinden, und die zum Aufbau einer Echtzeit-Audioverbindung fähig sind;
- Bilden einer Kommunikationsgruppe, die die ausführende Kommunikationseinheit und zumindest eine der ermittelten weiteren Kommunikationseinheiten umfasst;
- Festlegen einer Adressenzuordnung für einen Audiokanal über das Datennetzwerk zu der zumindest einen fernen Kommunikationseinheit;
- Bereitstellen eines Aktivierungselements an einer Benutzerschnittstelle der ausführenden Kommunikationseinheit, welches zumindest der einen fernen Kommunikationseinheit zugeordnet ist;
- Empfangen einer Benutzereingabe zur Aktivierung des Audiokanals durch Auswählen des Aktivierungselements; und
- Öffnen des Audiokanals über das Datennetzwerk unter Verwendung der Adresszuordnung und geöffnet Halten des Audiokanals, so lange das Aktivierungselement aktiviert ist;
wobei das Verfahren ein Intercom-System aufbaut, bei dem die gesamte Kommunikation über ein Datennetz ohne Zwischenschaltung eines Servers funktionsfähig ist.

Das erfindungsgemäße Verfahren erlaubt in vorteilhafter Weise einen flexiblen Aufbau eines Interkom-Systems über ein Datennetz, zum Beispiel ein vorhandenes oder extra für den jeweiligen Zweck erstelltes WLAN. Das Verfahren ist besonders einfach, da die gesamte Kommunikation ohne die Zwischenschaltung eines Servers funktionsfähig ist. Dadurch ist auch eine sehr hohe Fehler- und Störungstoleranz gegeben.

Als "Datennetz" kann jegliche Netzwerkanordnung betrachtet werden, die eine Kommunikation zwischen Endgeräten ermöglicht. Insbesondere kann das Datennetzwerk auch aus einer Kombination von unterschiedlichen Netzwerken gebildet sein. Beispielsweise kann die Kommunikation mit bestimmten Kommunikationseinheiten über ein Nahbereichs-Funknetzwerk, wie zum Beispiel eine Bluetooth-Verbindung, erfolgen, während die Datenübertragung zu weiteren Kommunikationseinheiten über ein lokales WLAN-Netzwerk, einen Zusammenschluss aus mehreren WLAN- und/oder LAN- und/oder WAN-Netzwerken erfolgt.

Weiters kann ein Datennetz auch eine Verbindung über das Internet umfassen, wobei sich in diesem Fall das Audiokommunikationssystem über mehrere (weltweit) verteilte Standorte erstrecken kann.

Als "Echtzeit-Audioverbindung" wird im Zusammenhang mit dieser Beschreibung eine Audioverbindung angesehen, deren zeitliche Verzögerung bei der Übertragung so gering ist, dass sie vom Benutzer kaum oder gar nicht wahrgenommen wird. Eine Audioverbindung kann insbesondere der Übertragung von Sprache dienen wobei es mit einer Echtzeit-Audioverbindung möglich ist, Gespräch zwischen zwei entfernten Benutzern in Echtzeit zu führen.

Unter dem Begriff "Audiokanal" wird im Zusammenhang mit der gegenständlichen Beschreibung allgemein ein Übertragungsweg bezeichnet, über den ein Audiosignal, das von einem Mikrofon auf einer Seite des Kanals aufgezeichnet wird, im Wesentlichen verzögerungsfrei über eine Audioausgabe, also insbesondere einen Lautsprecher oder Kopfhörer, auf der anderen Seite des Kanals ausgegeben wird. Ein Audiokanal kann offen sein, wobei Audiosignale übertragen werden, oder geschlossen, wobei keine Audiosignale übertragen werden.

Der Audiokanal arbeitet "im Wesentlichen verzögerungsfrei". Dies bedeutet, dass lediglich physikalisch und technisch bedingte Verzögerungen auftreten. Im Zusammenhang mit einer Sprachübertragung kann ein Audiokanal jedenfalls dann als im Wesentlichen verzögerungsfrei angesehen werden, wenn in vorteilhafter Weise die Audioverbindung eine Verzögerung von weniger als 40 ms, vorzugsweise weniger als 20 ms aufweist. Eine Verzögerung in dieser Größenordnung ist bei einer Sprachkommunikation für den Benutzer kaum oder gar nicht mehr wahrnehmbar, sodass zwei Gesprächspartner so miteinander reden können, wie bei einem direkten Zusammentreffen. Bei bestimmten Hard- oder Softwarekonfigurationen ist es manchmal nicht möglich, derart gute Werte zu erreichen, da aufgrund von Hard- oder Softwarebedingten Einschränkungen bestimmte Verzögerungszeiten nicht unterschritten werden können. In diesen Fällen kann das Audiokommunikationssystem zwar auch mit schlechteren Werten einigermaßen zufriedenstellend betrieben werden, zum Beispiel mit einer Verzögerung von 300-400 ms, es kann dabei jedoch zu merkbaren Qualitätseinbußen kommen, sodass das Verfahren immer so umgesetzt werden sollte, dass die Verzögerung der Audioverbindung stets so gering wie möglich ist.

Um eine Echte Push-to-Talk Funktionalität zu ermöglichen, ist es vorteilhaft, wenn das Öffnen des Audiokanals unmittelbar beim Aktiveren der Echtzeit-Audioübertragung erfolgt. "Unmittelbar" bedeutet in diesem Zusammenhang, dass die Verzögerung zwischen dem Auswählen des Aktivierungselements und dem Öffnen des Audiokanals vom Benutzer kaum oder gar nicht wahrgenommen wird. Dies ist erfindungsgemäß möglich, da die Adresszuordnung für den Audiokanal bereits festgelegt ist, und somit beim Aktivieren kein zeitaufwändiger Verbindungsaufbau mehr erfolgen muss.

In vorteilhafter Weise kann dabei die Adressenzuordnung exklusiv zugewiesene Ports beinhalten. Dadurch können (Audio-)Daten zu der weiteren Kommunikationseinheit (oder von dieser zurück) übertragen werden, ohne dass zuvor ein Verbindungsaufbau erfolgen muss. Jeder Datenkanal bleibt somit der Adressierung nach bestehen, auch wenn gerade keine Audioübertragung stattfindet. Jede Kommunikationseinheit kennt die offenen Ports aller anderen Kommunikationseinheiten der Kommunikationsgruppe, sodass der Datenverkehr unter Umgehung der dazwischenliegenden Verbindungsprotokolle direkt erfolgen kann. Dies ermöglicht sogar dann eine Kommunikation, wenn die Benutzerschnittstelle nicht mehr reagiert, aufgrund von Programmfehlern abstürzt oder der Kommunikationskanal selbst instabil wird.

Da Datennetzwerke die Ankunft eines Pakets (bzw. die richtige Reihenfolge der Ankunft von Paketen) nicht garantieren, können etwaige instabile Netzwerke durch an sich bekannte Techniken ausgeglichen werden. Dies umfasst beispielsweise die Nummerierung einzelner Datenpakete um diese anschließend richtig sortiert verarbeiten zu können. Bestehende Anwendungen finden sich im OSI Layer 4. Je höher also die Rate von fehlenden bzw. falsch eingereihten Paketen ist, desto instabiler wird das Netzwerk und desto mehr (länger) muss Zwischengespeichert werden. Diese Technik zum dynamischen Ausgleichen instabiler Netzwerke nennt man auch "adaptive Buffering", wobei dies zu Lasten der Verzögerungsfreiheit geht. Wenn sich das Netzwerk aus einer instabilen Lage erholt, verringert sich auch die Arbeit des Puffers und es kann wieder eine im Wesentlichen verzögerungsfreie Audiowiedergabe stattfinden.

In einer weiteren vorteilhaften Ausführungsform des erfindungsgemäßen Verfahrens können Aktivierungselemente für unterschiedliche Aktivierungsarten aktivierbar sein, umfassend eine beliebige Kombination aus einer aktiven, passiven, einseitigen und/oder gegenseitigen Audiokommunikation. Dadurch ist das Verfahren für viele verschiedene Einsatzbereiche flexibel verwendbar. In diesem Zusammenhang bedeutet "aktiv", dass Audiosignale zumindest vom eigenen Gerät zu fernen Gerät übertragen werden, "passiv" bedeutet, dass Audiosignale nur vom fernen Gerät zum eigenen Gerät übertragen werden, "einseitig" bezeichnet eine Signalübertragung nur in einer Richtung und "gegenseitig" bezeichnet eine Signalübertragung in beiden Richtungen. In besonders vorteilhafter Weise kann die aktuelle Aktivierungsart und/oder der aktuelle Status der Kommunikationsverbindung durch eine unterschiedliche Gestaltung des Aktivierungselements angezeigt werden. Dadurch können aktuelle Einstellungen und Systemzustände, aber auch Fehlfunktionen unmittelbar erkannt werden. Die Gestaltung der Aktivierungselemente kann sich dabei insbesondere hinsichtlich der Farbe, des Muster, der Form, der Anordnung des Aktivierungselements, der Beschriftung, der Anzeige von Symbolen, der Anzeige von Bildern auf dem Aktivierungselement oder einer Kombination aus diesen Maßnahmen unterscheiden. Das Aktivierungselement kann beispielsweise auch einen Avatar oder ein Bild des Kommunikationspartners bzw. der Gruppe, mit der kommuniziert wird, aufweisen.

In vorteilhafter Weise können alle im Datennetzwerk ermittelten Kommunikationseinheiten automatisch zur Kommunikationsgruppe zusammengefasst werden. Für kleinere Kommunikationsgruppen (z.B. weniger als 6 Personen) kann dies eine bevorzugte Vorgehensweise darstellen, da keinerlei Benutzertätigkeiten für die Bildung der Kommunikationsgruppe erforderlich sind. Die für den Benutzer zum Aufbau eines Audiokommunikationsnetzwerks erforderlichen Schritte beschränken sich in diesem Fall lediglich auf das Starten der App. Es werden dann automatisch alle Kommunikationseinheiten im gleichen Netzwerk (also z.B. im gleichen WLAN) gescannt und der Kommunikationsgruppe hinzugefügt. Weitere Konfigurationsschritte sind nicht erforderlich. Selbstverständlich können bei Bedarf über Menüfunktionen weitere Konfigurationen nachträglich angeboten werden.

In einer weiteren vorteilhaften Ausführungsform des erfindungsgemäßen Verfahrens kann weiters der Schritt des Bildens einer Kommunikationsgruppe das Definieren von Untergruppen und/oder das Zuweisen von Berechtigungen aufweisen. Die Kommunikation zu allen Kommunikationseinheiten einer Untergruppe kann dann z.B. mit einem einzigen Aktivierungselement gemeinsam aktiviert werden. In Verbindung mit dem Vergeben von Berechtigungen können komplexe Organisationsstrukturen nachgebildet werden. In der Praxis kann beispielsweise das Securitypersonal einer Veranstaltung in einer eigenen Untergruppe zusammengefasst werden, wobei jeder aus der Untergruppe die Berechtigung hat, einen Sprachkanal zu einem Leiter der Untergruppe oder zur gesamten Untergruppe zu aktivieren, eine Aktivierung von Sprachkanälen untereinander oder zu einer anderen Untergruppe kann unterbunden sein. Der Gruppenleiter wiederum kann mit Umfassenderen Berechtigungen versehen sein, sowohl zu Einzelpersonen aus der Untergruppe, als auch zu anderen Einheiten außerhalb der Gruppe Kanäle zu öffnen.

In einer weiteren vorteilhaften Ausgestaltung der Erfindung kann eine Kommunikationsverbindung zusätzlich zur Übertragung von Daten aktivierbar sein. Einerseits können dadurch Dokumente, aber auch z.B. aktuelle Bilder oder Videoaufnahmen übermittelt werden, andrerseits lassen sich z.B. Abstimmung, Bestätigung, etc., "auf Knopfdruck" realisieren.

In vorteilhafter Weise kann die Audioübertragung eine Sprachaktivierung aufweisen. Für spezielle Anwendungen kann die Sprachaktivierung das Aktivierungselement ergänzen oder sogar ersetzen. Zusätzlich kann die Audioübertragung auf einem offenen Audiokanal sprachgesteuert erfolgen. Gegebenenfalls kann eine Filterfunktion Hintergrundgeräusche o.Ä. ausblenden. Dadurch lässt sich die Sprachaktivierung auch in lauten Umgebungen, wie zum Beispiel in Stadien, nutzen.

In einer bevorzugten Ausführungsform der Erfindung können die ausführende und/oder die fernen Kommunikationseinheiten jeweils ein ortsfestes oder mobiles Benutzergerät sein, und insbesondere können sie ausgewählt sein aus Smartphones, Mobiltelefonen, Funkgeräten, Funk-Headsets, Tablet-PCs, Personalcomputern, zur Audiokommunikation fähigen Funkmeldeempfängern, für das Verfahren spezifisch ausgebildeten Vorrichtungen oder ähnlichen Geräten. Das Verfahren kann somit plattformunabhängig betrieben werden, wobei nicht nur Herstellerabhängiges Equipment, sondern zum Beispiel auch die eigenen Geräte der Teilnehmer zum Aufbau eines Kommunikationsnetzes verwendet werden können. Somit können auch verschiedene Geräte am Aufbau des Kommunikationsnetzes beteiligt sein.

In vorteilhafter Weise kann die Audioübertragung verschlüsselt erfolgen. Dadurch kann eine echte End-to-End-Verschlüsselung zwischen den Kommunikationseinheiten sehr effektiv realisiert werden. Eine solche End-To-End Verschlüsselung kann auf bestehenden und gut getesteten Techniken der Verschlüsselung in IP-basierten Netzwerken basieren. Hier kann auf verschiedenen Ebenen des OSI-Schichtmodells agiert werden. Hauptsächlich bietet sich Schicht 4 an, mit so genannten Stream-Ciphern basierend auf den Verschlüsselungsstandards AES, Salsa20 oder DTLS. Hierbei werden bestimmte Schlüssel ausgetauscht, bevor die ersten verschlüsselten Datenpakete übermittelt werden.

In einer weiteren vorteilhaften Ausführungsform können die von der ausführenden Kommunikationseinheit ausgeführten Verfahrensschritte in einem auf unterschiedlichen Endgeräten lauffähigen Computerprogrammprodukt definiert sein. Dadurch können beliebige Endgeräte, auf denen das Computerprogrammprodukt (das allgemein auch als "App" bezeichnet wird) lauffähig ist, spontan in eine bestehende Kommunikationsgruppe eingebunden oder zum Aufbau einer neuen Kommunikationsgruppe verwendet werden. Es ist lediglich das Herunterladen und Starten der entsprechenden App notwendig.

Die gegenständliche Erfindung betrifft weiters ein Echtzeit-Audiokommunikationssystem mit einer Vielzahl an Kommunikationseinheiten, welche jeweils zumindest eine Kommunikationsschnittstelle zur Verbindung mit dem Datennetzwerk und eine Audioausgabe aufweisen, wobei zumindest eine der Kommunikationseinheiten zur Durchführung des obigen erfindungsgemäßen Verfahrens ausgebildet ist. Ein solches Audiokommunikationssystem kann entweder als ganzes oder zum Teil von einem Anbieter bereitgestellt werden, oder Besitzer einer geeigneten Hardware (ein einfaches Smartphone reicht im Grunde aus) können diese durch Download des entsprechenden Programms in bestehende oder neue Systeme einbinden. Dabei ist eine beliebige Kombination aus professionellem Equipment und "eigenen" Geräten, z.B. den persönlichen Smartphones von einzelnen Benutzern, möglich.

Die gegenständliche Erfindung wird nachfolgend unter Bezugnahme auf die Figuren 1 bis 6 näher erläutert, die beispielhaft, schematisch und nicht einschränkend vorteilhafte Ausgestaltungen der Erfindung zeigen. Dabei zeigt
Fig.1 eine schematische Darstellung mehrerer Geräte eines erfindungsgemäßen Audiokommunikationssystems;
Fig. 2 zeigt eine bespielhafte Ausführungsform einer Benutzeroberfläche einer Kommunikationseinheit;
Fig. 3 zeigt Beispiele für die Verwendung unterschiedlicher Endgeräte als Kommunikationseinheiten; und
Fig. 4 zeigt eine schematische Darstellung von Kommunikationseinheiten zur Erläuterung der Port-Adressierung gemäß einer bevorzugten Ausführungsform der Erfindung.

Bezugszeichen von Elementen, die in einer Figur mehrfach vorkommen, sind zur leichteren Unterscheidung jeweils mit einem Kleinbuchstaben ergänzt.

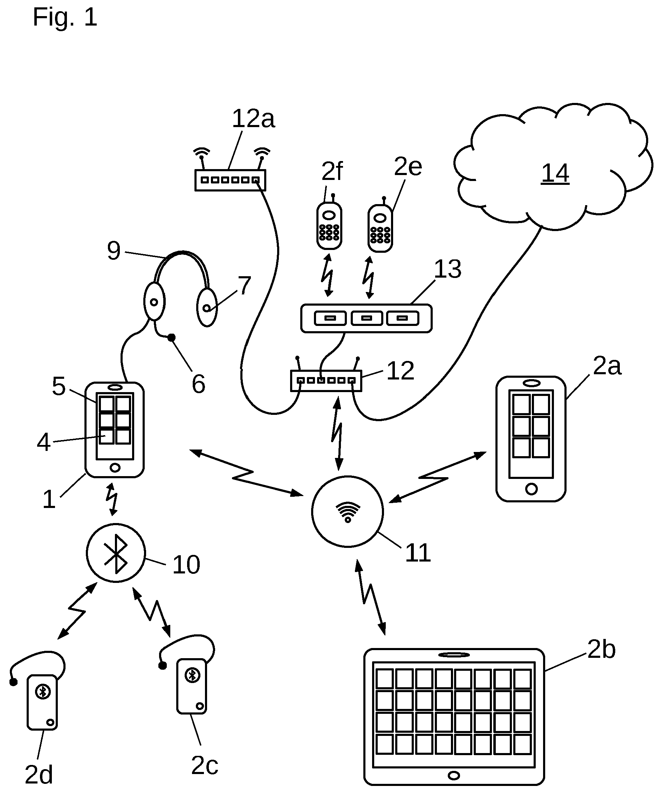

Fig. 1 zeigt eine Beispielhafte Kombination einiger unterschiedlicher Geräte, die in einem erfindungsgemäßen Echtzeit-Audiosystem zusammengefasst sind. Als ausführende Kommunikationseinheit 1 ist ein übliches Smartphone vorgesehen, das als Benutzerschnittstelle 5 einen Touchscreen aufweist. Auf der Benutzerschnittstelle 5 sind mehrere Aktivierungselemente 4 angeordnet, die in weiterer Folge noch genauer beschrieben werden. An die Kommunikationseinheit 1 ist ein Headset 9 angeschlossen, welches ein Mikrofon 6 und Ohrhörer, die als Audioausgabe 7 dienen, aufweist. Das Headset 9 könnte auch kabellos mit der Kommunikationseinheit 1 verbunden sein, wie dies im Fachbereich üblich und wohlbekannt ist.

Weiters kann die Kommunikationseinheit 1 über eine Bluetoothverbindung 10 mit einem oder mehreren Bluetooth-Headsets verbunden sein, die im dargestellten Fall als weitere Kommunikationseinheit 2c, 2d ausgebildet und jeweils einem anderem Benutzer zugeordnet sind. In einer besonders einfachen Ausführungsform würde eine Kombination aus einem (oder mehreren) Smartphones, die über Bluetooth untereinander und gegebenenfalls mit einer Anzahl an weiteren Bluetooth-Headsets verbunden sind, bereits ausreichen, um das erfindungsgemäße Verfahren, das weiter unten eingehender beschrieben wird, auszuführen um ein erfindungsgemäßes Echtzeit-Audiokommunikationssystem aufzubauen. Allerdings wäre solch ein Netzwerk nur für sehr kleine Bereiche geeignet und daher nur eingeschränkt verwendbar, z.B. für Gruppenführungen für Museen und Ausstellungen, oder zum Aufbau eines "Notbetriebs", wenn andere Kommunikationsnetzwerke ausgefallen sind.

Bevorzugter Weise weist die ausführende Kommunikationseinheit 1 eine Verbindung mit einem (in Fig. 1 nur schematisch als Symbol dargestellten) WLAN-Netzwerk 11 auf, sodass eine Kommunikation mit anderen Geräten im Netzwerk über den ganzen Deckungsbereich des WLAN-Netzwerks 11 und gegebenenfalls auch darüber hinaus möglich ist. In Fig. 1 sind als weitere Kommunikationseinheiten ein weiteres Smartphone 2a, ein Tablet-PC 2b, mehrere Funkgeräte 2e, 2f und die beiden bereits genannten Bluetooth-Headsets 2c, 2d dargestellt.

Das weitere Smartphone 2a kann auf dem gleichen oder einem anderen Betriebssystem laufen, wie das Smartphone der ausführenden Kommunikationseinheit 1, wobei der Unterschied zwischen einer "ausführenden Kommunikationseinheit" und einer "weiteren Kommunikationseinheit" ausschließlich vom Betrachtungsstandpunkt abhängig ist. Die Unterscheidung zwischen "ausführender" und "weiterer" Kommunikationseinheit dient lediglich der Erläuterung und klaren Definition der Erfindung und ist darüber hinaus nicht als einschränkend zu verstehen. Somit könnte das in Fig. 1 als "weitere Kommunikationseinheit" dargestellte Smartphone 2a im Sinne der Erfindung auch als ausführende Kommunikationseinheit betrachtet werden, wobei in diesem Fall das in Fig. 1 als "ausführende Kommunikationseinheit 1" dargestellte Smartphone als weitere Kommunikationseinheit zu betrachten wäre. Dies ist kein Widerspruch, da das erfindungsgemäße Verfahren in einem Echtzeit-Kommunikationssystem gemäß der Erfindung im Allgemeinen von mehreren Kommunikationseinheiten parallel ausgeführt wird, die dann, abhängig vom jeweiligen Standpunkt, als ausführende oder als weitere Kommunikationseinheiten betrachtet werden können.

Ähnliches gilt auch für den Tablet-PC 2b, der ebenfalls ein beliebiges Betriebssystem aufweisen kann, auf dem eine App lauffähig ist, die das erfindungsgemäße Verfahren auf dem Tablet-PC ausführt. Sowohl der Tablet-PC 2b, als auch das weitere Smartphone 2a haben einen Touchscreen als Benutzeroberfläche, auf dem die Aktivierungselemente 4 vorgesehen sein können.

In dem WLAN-Netzwerk 11 kann auch ein Router 12 vorgesehen sein, der eine Verbindung zu einem Fernnetzwerk, wie etwa dem Internet 14 und gegebenenfalls zu weiteren Netzwerken aufweisen kann. In Fig. 1 ist eine Verbindung zu einem weitern Router 12a für ein WLAN-, WAN- oder LAN-Netz dargestellt, über den Geräte in den entsprechenden anderen Netzwerken in das erfindungsgemäße Audiokommunikationssystem eingebunden werden können.

An den Router 12 der Fig. 1 ist weiters eine Funkstation 13 angeschlossen, die eine Kommunikation mit mehreren Funkgeräten 2e, 2f ermöglicht, wobei die Funkgeräte jeweils als weitere Kommunikationseinheiten 2 angesehen werden können, unabhängig davon, ob diese dazu geeignet sind, alle Funktionalitäten des erfindungsgemäßen Verfahrens auszuführen oder nicht. Die Funkstation kann beispielsweise für größere Events zusammen mit den Funkgeräten als professionelles Equipment angemietet werden, falls es zum Beispiel erforderlich ist, den Einsatzbereich des Datennetzwerks über den Funkbereich des WLAN-Netzes hinaus zu erstrecken. Damit ist beispielsweise bei (Sport)-Veranstaltungen in flächenmäßig großen Arealen eine durchgängige Kommunikation möglich. So könnte beispielsweise der Boxenbereich bei Motorsportveranstaltungen oder der Start- und Zielbereich bei Alpinsportbewerben ein flächendeckendes WLAN-System aufweisen, während die Streckenposten, die sich außerhalb der WLAN-Reichweite befinden, über Funkgeräte kommunizieren können.

Weiters wäre es möglich mehrere WLAN-Basen, etwa über Richtfunkstrecken, miteinander zu verbinden, etwa bei einer Berg- und einer Talstation in einem Skigebiet. Durch gleiche Konfiguration der WLANs, buchen sich die benutzten Geräte automatisch in das jeweilige WLAN ein ("Wifi roaming") und über den Richtfunk wird die Zusammenschaltung dieser zwei separaten "Blasen" gewährleistet. Somit entsteht für die benutzten Geräte ein großes Netzwerk, obwohl die Standorte weit auseinander liegen.

Sowohl im professionellen, als auch im semiprofessionellen und Amateurbereich sind zahllose Anwendungsmöglichkeiten für das erfindungsgemäße Audiokommunikationssystem denkbar. Zu Beispielen für solche Anwendungsmöglichkeiten zählen, ohne darauf beschränkt zu sein, Sportveranstaltungen, Kunst- und Kulturevents, betriebs- und konzerninterne Kommunikation, Kommunikation in Industriellen oder kommerziellen Anlagen, Kommunikation unter Teilnehmern an einer Gruppe, wie etwa bei Führungen, Reisegruppen, Freizeitgestaltung, Crewkommunikation oder ähnliches.

Viele Geräte besitzen die Möglichkeit zur Einrichtung eines ad-hoch WLANs. Dadurch kann beispielsweise ein Gerät, mit dem das erfindungsgemäße Verfahren ausgeführt wird, selbst als Router agieren und somit beispielsweise ein mobiles Netzwerk erstellten, das für die Kommunikation verwendet wird. Beispielsweise könnte ein Reiseführer mit seinem Gerät das Netzwerk aufbauen, und den umliegenden Personen der Reisegruppe einen Zugriff auf das WLAN erlauben, über das dann die Kommunikationsverbindung aufgebaut wird.

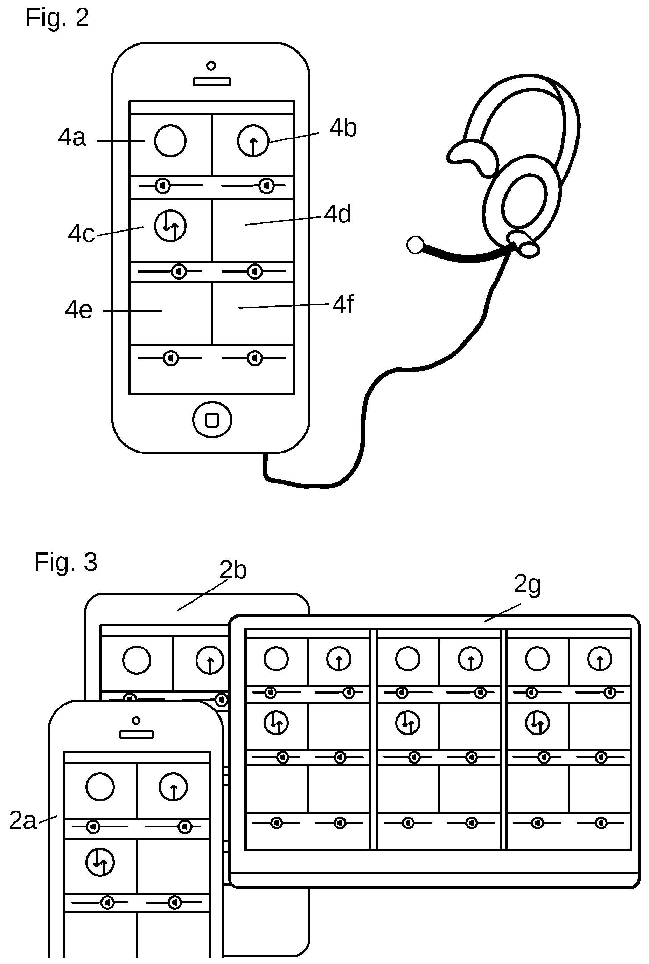

Das Verfahren, das beim Aufbau eines Echtzeit-Audiokommunikationssystems erfindungsgemäß verwendet werden kann wird im Folgenden anhand einer beispielhaften Ausführungsform unter Bezugnahme auf Fig. 2 in Verbindung mit Fig. 1 detailliert beschrieben. Fig. 2 zeigt die ausführende Kommunikationseinheit 1, im dargestellten Fall ein Smartphone mit einem daran angeschlossenen Headset 9, in einer detaillierteren Darstellung. Die Verwendung eines Headsets stellt eine bevorzugte Ausführungsform dar, es kann jedoch auch eine andere Kombination aus Lautsprecher und Mikrofon für das erfindungsgemäße Verfahren verwendet werden.

Um ein Echtzeit-Audiokommunikationssystem aufzubauen (oder um das Smartphone 1 einem bestehenden System hinzuzufügen), wird die für das entsprechende Betriebssystem vorgesehene App heruntergeladen und gestartet. Je nach Betriebseinstellungen kann nun eine Auswahl erfolgen, über welche Netzwerke der Aufbau des Kommunikationssystems erfolgen soll, wobei in einer Grundeinstellung das WLAN-Netzwerk als Vorgabewert verwendet wird, mit dem das Smartphone gerade verbunden ist.

Die App scannt nun das Netzwerk nach weiteren Kommunikationseinheiten, mit denen eine Audioverbindung hergestellt werden kann und stellt diese dem Benutzer zur Auswahl, der aus diesen eine Kommunikationsgruppe zusammenstellen kann (oder es werden alle Verfügbaren Geräte automatisch zu einer Gruppe zusammengefasst). Der Scanvorgang kann beispielsweise über einen allgemeinen offenen Port erfolgen, der einheitlich von allen Geräten für die Kommunikation beim Verbindungsaufbau verwendet wird. Gegebenenfalls können weitere Geräte, die über die Scanfunktion nicht erkennbar sind, über entsprechende Abfragen hinzugefügt werden. Dies kann beispielsweise dann erforderlich sein, wenn sich weitere Kommunikationseinheiten außerhalb desselben WLAN-Netzes befinden, oder wenn Geräte als weitere Kommunikationseinheiten hinzugefügt werden sollen, die selber nicht das erfindungsgemäße Verfahren ausführen (bzw. die entsprechende App verwenden), sondern die reine Endgeräte sind, wie dies zum Beispiel bei den Funkgeräten 2e und 2f oder den Bluetooth-Headsets 2c und 2d in Fig. 1 der Fall sein kann.

Für den Suchprozess kann beispielsweise auf jedem Gerät ein freier Port geöffnet werden. Dieser wird anschließend an eine spezielle IP-Adresse gesendet ("advertised"). Diese Adresse ist eine so genannte Broadcast-Adresse, welche dieses Paket weiterverteilt an die restlichen Clients im Netzwerk. Die anderen Geräte haben gleichzeitig einen Programm laufen, welches speziell nach dem beworbenen Service sucht, wobei die ausgesendeten Pakete gefiltert und analysiert werden, und dadurch die anderen Geräte finden kann. Dieser Vorgang läuft unabhängig von der Adressierung ab, da Namen benutzt werden. Erst danach wird die jeweilige IP-Adresse ermittelt (diese kann sich ja jederzeit ändern). Anschließend werden dann die direkten Verbindungen zwischen den Geräten hergestellt.

Zur Erleichterung der Auswahl der Kommunikationsgruppe, die immer für die ausführende Kommunikationseinheit definiert wird, können beliebige Benutzeroberflächen, Listendarstellungen oder Abfragen verwendet werden. Für die Gestaltung und Programmierung geeigneter Benutzeroberflächen sind im Fachbereich zahllose Möglichkeiten bekannt.

In einer bevorzugten Ausführungsform wird für die Auswahl der Kommunikationsgruppe eine graphische Benutzeroberfläche verwendet, die im Wesentlichen der in Fig. 2 dargestellten Benutzeroberfläche entspricht, wobei die Elemente für den Auswahlvorgang und die Bildung der Kommunikationsgruppe unterschiedlich gestaltet sein können, um sie von der Benutzeroberfläche während des Betriebs zu unterscheiden. Aktivierungselemente für weitere Kommunikationseinheiten, die zwar verfügbar sind, aber der Kommunikationsgruppe noch nicht hinzugefügt wurden, können beispielsweise durch eine eigene Farbgebung oder Gestaltung gekennzeichnet sein, zum Beispiel in blasser Farbe, in Grautönen, oder sie können sich hinsichtlich ihrer Größe oder Form unterscheiden.

Es ist weiters möglich, vordefinierte Gruppen zu verwenden, oder Gruppen, die bereits in einer weiteren Kommunikationseinheit definiert wurden, als ganzes zu übernehmen. Die Auswahl der Kommunikationsgruppe kann dadurch in sehr kurzer Zeit abgeschlossen sein.

In Fig. 2 ist auf dem Touchscreen des Smartphones die Benutzeroberfläche 5 so dargestellt, wie sie nach der Auswahl der Kommunikationsgruppe 3 während des Betriebs des Kommunikationssystems aussehen könnte. Auf der Benutzeroberfläche 5 sind mehrere Aktivierungselemente 4a, 4b, 4c, 4d, 4e und 4f in Form von einzelnen Rechtecken angeordnet. Jedes Aktivierungselement kann einer weiteren Kommunikationseinheit oder einer Untergruppe an Kommunikationseinheiten zugeordnet sein, wobei im dargestellten Fall das Aktivierungselement 4a dem Smartphone 2a (Fig. 1), Aktivierungselement 4b dem Tablet-PC 2b und Aktivierungselement 4c dem Bluetooth-Headset 2c zugeordnet ist. Den Aktivierungselementen 4d, 4e und 4f ist im gegenständlichen Fall keine Kommunikationseinheit zugeordnet. Somit bilden die Kommunikationseinheiten 2a, 2b und 2d (Fig. 1), die den Aktivierungselementen 4a, 4b und 4c zugeordnet sind, zusammen mit der ausführenden Kommunikationseinheit 1 die Kommunikationsgruppe 3, wie sie für die Kommunikationseinheit 1 definiert ist. Jedem Aktivierungselement ist weiters ein eigener Lautstärkenregler 8 zugeordnet, über den die Lautstärke des jeweiligen Audiokanals einstellbar ist.

In einem erfindungsgemäßen Echtzeit-Audiokommunikationssystem, in dem mehrere Kommunikationseinheiten das erfindungsgemäße Verfahren parallel ausführen, ist es nicht erforderlich, dass die Kommunikationsgruppen 3 für jede Einheit identisch sind, auch wenn dies in vielen Fällen der Fall sein kann. Die Kommunikationsgruppe ist immer für die jeweilige ausführende Kommunikationseinheit definiert und kann für diese beliebig erweitert und eingeschränkt werden. Da kein zentraler Server erforderlich ist, ist es auch nicht erforderlich, die einzelnen Kommunikationsgruppen 3 zentral zu definieren. Dennoch kann eine vorab erstellte Definition von den ausführenden Kommunikationseinheiten verwendet werden, wenn dies für die jeweilige Anwendung vorteilhaft ist. Die Definitionen könnten dann beispielsweise auch auf einem Server zum Download bereitgestellt werden, wobei dieser Server nicht an der Durchführung des Kommunikationsverfahrens beteiligt ist. Vor allem für größere und Komplexere Kommunikationssysteme kann eine Vorabdefinition den Systemaufbau erheblich vereinfachen und beschleunigen.

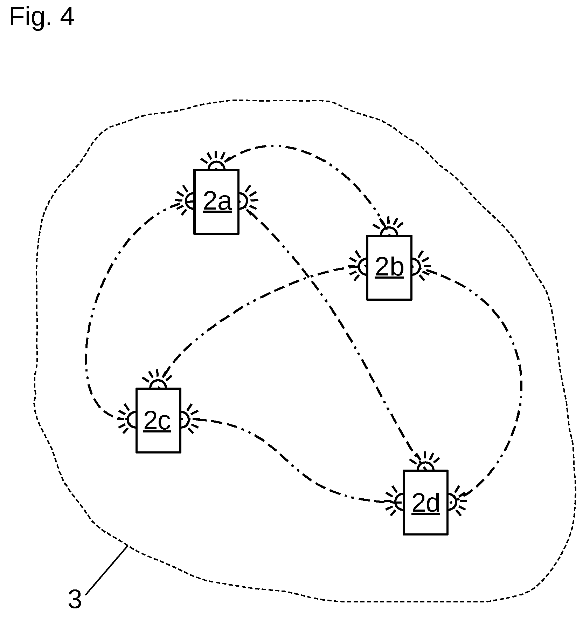

Sobald eine weitere Kommunikationseinheit zu der Kommunikationsgruppe hinzugefügt wird, wird über das Datennetzwerk eine Verbindung zu dieser weiteren Kommunikationseinheit aufgebaut, wobei eine Adressierung verwendet wird, die vorzugsweise in weiterer Folge unverändert bleibt. In vorteilhafter Weise kann von der ausführenden Kommunikationseinheit für jede weitere Kommunikationseinheit in der Gruppe ein eigener Port definiert werden, der ausschließlich für die Kommunikation mit dieser weiteren Kommunikationseinheit reserviert ist, wobei die weitere Kommunikationseinheit ebenfalls einen eigenen Port für die ausführende Kommunikationseinheit reservieren kann. In Fig. 4 ist eine solches Netzwerk für ein Audiokommunikationssystem mit vier Kommunikationseinheiten (2a, 2b, 2c, 2d), die jeweils als ausführende Kommunikationseinheit betrieben werden und die eine Kommunikationsgruppe 3 bilden, schematische und beispielhaft dargestellt. Jede der Kommunikationseinheiten hat drei Ports definiert, wobei jeder Port genau einem anderen Port einer weiteren Kommunikationseinheit zugeordnet ist. Diese Ports bleiben ständig geöffnet, sodass nach dem Einrichten des Kommunikationssystems eine neuerliche Adressierung nicht mehr erforderlich ist. Dabei können einzelne Ports auch für mehr als einem Kommunikationspartner genutzt werden.

Im Grunde ist es ausreichend, wenn jede Kommunikationseinheit für die Audiokommunikation zwei Ports offen hält (einen für das Senden, einen für das Empfangen). Bei zwei Partnern können pro Gerät somit zwei Ports für Audiodaten (Senden, Empfangen) und zwei Ports (Senden, Empfangen) für Kontrolldaten (Autorisierungen anfragen, Anfragen, ob der Partner noch verfügbar ist, etc.) offen sein.

Es wäre auch möglich weniger Ports geöffnet zu halten und die passende Adressierung über ein bestimmtes Format in den Datenpaketen selbst zu regeln. Die genaue Umsetzung kann nach den persönlichen Vorlieben des jeweiligen Entwicklers erfolgen.

Wieder Bezug nehmend auf Fig. 2 wird die Verwendung einer Benutzeroberfläche 5 einer ausführenden Kommunikationseinheit 1 in einem Echtzeit-Audiokommunikationssystem detailliert beschreiben. Jedes Aktivierungselement ist aufgrund einer Kombination aus Farbe, Muster, Beschriftung und bildlicher Gestaltung gekennzeichnet, sodass der jeweilige Zustand des Kommunikationskanals schnell erkennbar ist. In Fig. 2 ist beispielsweise das Aktivierungselement 4a mit einem kreisförmigen Icon versehen, welches darauf hinweist, dass sich der Audiokanal zu der mit dem Aktivierungselement 4a verknüpften Kommunikationseinheit in einem Standby-Zustand befindet (d.h. die der Audiokanal ist verfügbar, aber derzeit geschlossen). Zur schnelleren Erkennung des Icons kann diesem auch eine bestimmte Farbe zugeordnet sein, zum Beispiel könnten alle Aktivierungselemente, die auf Standby sind, eine blaue Farbe aufweisen.

Der Audiokanal zu einer Kommunikationseinheit kann durch aktivieren des entsprechenden Aktivierungselements geöffnet werden, wobei mehrere Aktivierungsarten vorgesehen sein können. Zum Beispiel können Aktivierungselemente mittels einer "Push-to-Talk" Funktion kurzfristig durch berühren des Aktivierungselement geöffnet werden, wobei die Verbindung wieder geschlossen wird, sobald die Berührung wieder gelöst wird. Es ist auch möglich, mehrere Aktivierungselemente gleichzeitig mit mehreren Fingern zu drücken, wobei dann alle entsprechenden Sprachkanäle gleichzeitig geöffnet sind. In Fig. 2 zeigt das Aktivierungselement 4b zur Kennzeichnung des Push-To-Talk-Betriebs ein rundes Icon mit einem einfachen Pfeil, wobei dem Icon die grüne Farbe zugeordnet sein kann. Diese Kennzeichnung kann sowohl dann verwendet werden, wenn der Push-To-Talk-Betrieb selbst aktiviert wird (Aktiv-Push-To-Talk), als auch dann, wenn gerade ein anderes Gerät über die Push-to-Talk-Funktion einen Audiokanal zum eigenen Gerät geöffnet hat (Passiv-Push-To-Talk). Es ist somit immer schnell erkennbar, welcher Teilnehmer gerade spricht.

Es ist auch möglich, dass beide Partner zur im Wesentlichen gleichen Zeit ein Aktives Push To Talk starten (Simultanes Push To Talk). In dem Fall wird eine zweiseitige Audiokommunikation aufgebaut, bis einer der Kommunikationspartner die Berührung löst. Dann wechselt der Status in Passiv Push To Talk oder Standby.

Um einen Audiokanal permanent zu öffnen, kann dieser beispielsweise doppelt gedrückt werden, wobei er seine Farbe zum Beispiel auf Rot ändert und das Icon des Aktivierungselements 4c mit einem Roten Kreis und zwei Pfeilen zeigt. Anhand der Farbe und des Icons ist für den Benutzer jederzeit schnell erkennbar, welche Audiokanäle gerade geöffnet sind. Um die Kanäle zu kennzeichnen ist jedes Aktivierungselement beschriftet, wobei vorzugsweise der Name und gegebenenfalls die Position des jeweiligen Gesprächspartners angegeben sein kann. Gegebenenfalls kann auch ein Bild oder ein Avatar des Gesprächspartners angezeigt werden.

Je nach Bedarf und gesetzten Berechtigungen kann die Aktivierung eines dauerhaften Audiokanals (Aktivierungselement 4c) entweder sofort nach Auswahl wirksam werden, oder sie kann die Bestätigung durch den Gesprächspartner erfordern, wobei in diesem Fall das Aktivierungselement beispielsweise in abwechselnd blinkenden Farben dargestellt sein kann, solange die Verbindung nicht bestätigt ist. Im umgekehrten Fall kann ein Aktivierungselement bei einer eingehenden Aktivierungsanfrage zu blinken beginnen, bis die Anfrage durch berühren des Ikons bestätigt wird. Eingehende Aktivierungsanfragen können, so wie andere Ereignisse auch, durch ein akustisches Signal angezeigt werden. Gegebenenfalls kann die Anfrage, zum Beispiel durch doppeltes Berühren des Aktivierungselements, auch abgewiesen werden.

Die Aktivierungselemente 4d-4f, die in Fig. 2 keiner Kommunikationseinheit zugeordnet sind, können gegebenenfalls auch nachträglich durch Auswählen einer weiteren Kommunikationseinheit dieser zugeordnet werden. Weiters ist es möglich, eine Untergruppe von mehreren Kommunikationseinheiten der Kommunikationsgruppe zu erstellen, die dann einem einzigen Aktivierungselement, zum Beispiel dem Aktivierungselement 4e der Fig. 2 zugeordnet werden kann. Alle Kommunikationseinheiten, die in einer Untergruppe zusammengefasst sind, können mit dem einen Aktivierungselement gleichzeitig aktiviert oder deaktiviert werden. Dies könnte zum Beispiel verwendet werden, um alle Streckenposten, alle Kameraleute, alle Securities, etc. gleichzeitig anzusprechen. Es kann ausgewählt werden, ob für eine Kommunikationseinheit, die einer Untergruppe zugeteilt ist, noch ein weiteres, eigenes Aktivierungselement verwendet werden soll, oder nicht. Eine einzige weitere Kommunikationseinheit kann auch mehreren Gruppen gleichzeitig zugeordnet sein.

Fig. 3 zeigt beispielhaft drei unterschiedliche Geräte, die als Kommunikationseinheiten verwendet werden können, nämlich ein Smartphone 2a, einen Tablet-PC 2b und einen Laptop-PC 2g. Die unterschiedliche Größe der Displays erlaubt auf größeren Geräten die Darstellung einer größeren Anzahl an Aktivierungselementen, wobei gegebenenfalls mit entsprechenden Computern auch sehr große Bildschirme verwendet werden können, um Anlagen mit zahlreichen Sprechstellen oder Untergruppen übersichtlich darstellen zu können. Eine Solche Ausführungsform könnte die Funktionalität einer Kommunikationszentrale einnehmen. In Fig. 3 ist zu erkennen, dass die einfache und übersichtliche Gestaltung der kachelartig angeordneten Aktivierungselemente gut auf unterschiedliche Displaygrößen skalierbar ist, ohne an Übersichtlichkeit einzubüßen.

Es ist auch möglich Geräte mit einer eingeschränkten Funktionalität in die Kommunikationsgruppe einzubinden. Beispielsweise können bestimmte Personen mit einer vereinfachten Kommunikationseinheit ausgestattet werden, die keine Touchscreen-Benutzerschnittstelle aufweist, sondern nur eine eingeschränkte Auswahl an vordefinierten Aktivierungselementen oder eine einzige Aktivierungstaste zum Aktivieren einer vordefinierten Sprachverbindung zu einer vordefinieren ausführenden Kommunikationseinheit. Es wäre auch möglich, für diese Geräte, die nicht über die volle Funktionsfähigkeit des erfindungsgemäßen Verfahrens verfügen, ganz ohne Aktivierungselemente zu verwenden, wobei in dem Fall eine Sprachsteuerung verwendet werden könnte, um zu erkennen, wann der Benutzer gerade spricht, und dann die Audioverbindung zu öffnen. Ein solches System könnte beispielsweise für Kameraleute oder adere Personen verwendet werden, die keine Hände frei haben, um eine zusätzliche Benutzerschnittstelle zu bedienen.

In alternativen Ausführungsformen der Erfindung können gegebenenfalls weitere Betriebsmodi bereitgestellt werden, wobei im Folgenden einige Betriebsmodi und deren Bezeichnungen beispielhaft aufgelistet sind.

"Symbol the Voice" (STV): Aktivierungselementen können Bilder zugeordnet werden (Personenbilder, Symbole für Gruppen/für eine Person, Avatare).

"Auto Voice Mode" (AVM): Sprachaktivierung (Übertragung nur wenn gerade gesprochen wird).

"Add My Voice" (AMV): Die eigene Stimme wird als Sidechannel über die eigenen Kopfhörer wiedergegeben. Die Stimme wird vorzugsweise nur dann rückgespielt, wenn ein aktives/simultanes Push-To-Talk oder eine permanente Verbindung besteht (und das Micro nicht auf Stumm gestellt ist).

"Machine Voice Mode" (MVM): Bei bestimmten Ereignissen kann ein Audio-Feedback generiert und mittels Sprachsynthese abgespielt werden (wenn sich zum Beispiel das Handy gerade in der Hosentasche befindet.

"2 Channel" (2CM): Panning-Funktionalität, wobei Personen bzw. Audiokanäle auf dem linken und rechten Ohr aufgeteilt werden. Mithilfe eines Surroundsystems wären auch mehrere Kanäle (z.B. rechts - links - center) denkbar, wobei eine noch größere Anzahl durch die Verwendung von Surround-Kopfhörersystemen ermöglicht werden könnte.

"Auto Recovery Mode" (ARM): Möglichkeit einer Status-Wiederherstellung, z.B. bei einem Programmabsturz zum Wiedereinstieg. Die Verbindungen werden automatisch wiederhergestellt.

"Other Voice Occupied" (OVO): Der Status einer weiteren Kommunikationseinheit wird auf dem Aktivierungselement dargestellt (Wenn zum Beispiel der Gesprächspartner mit dem als Kommunikationseinheit dienenden Mobiltelefon ein Telefonat entgegennimmt wird dies den Kommunikationspartnern auf deren Geräten angezeigt).

"Wifi Field Monitor" (WFM): Es kann nicht nur die Feldstärke des WLANs dargestellt werden, sondern auch die momentane Stabilität, die sich auf die Qualität der Echtzeitübertragung auswirken kann.

"Voice Monitor Mode" (VMM): Es wird symbolisch angezeigt, wer gerade spricht.

"Bundle Voice Mode" (BVM): Diese Funktion entspricht der beschriebenen Bildung von Untergruppen.

"Secure Chat Mode" (SVM): Die Signale werden Verschlüsselt übertragen.

"External Control Mode" (ECM): Funktionen der App können über eine Headsetsteuerung (d.h. über die am Headset vorgesehenen Steuerelemente) bedient werden. Dazu können beispielsweise die Lauter- und Leiser-Tasten mit alternativen Funktionen belegt werden.

"Call Last Voice" (CLV): Ein Aktivierungselement dient für einen Rückruf zu dem zuletzt aktiven Gesprächspartner, um dieser Person schnell Antworten zu können, ohne das entsprechende Aktivierungselement für den entsprechenden Kanal suchen zu müssen.

"Line To All" (LTA): Alle Audiokanäle werden für einen Ringruf (Sprechverbindung an alle) gleichzeitig geöffnet.

"LineApp Over Internet" (LOI): Mehrere WLAN-Inseln können über das Internet zusammengeschalten werden.

"Stay Connected Mode" (SCM): Beim Wegfall des WLAN-Netzes wird automatisch auf ein alternatives Netzwerk, vorzugsweise ein Netzwerk des Mobiltelefonanbieters, gewechselt. Die erforderlichen Adressierungsdaten (also z.B. Telefonnummern der weiteren Kommunikationseinheiten) können beim anfänglichen Verbindungsaufbau zusammen mit den anderen Adressierungsdaten der weiteren Kommunikationseinheiten gespeichert werden.

"Locate Voice Mode" (LVM): Die Position eines gerade übertragenden Geräts wird per GPS erfasst und kann auf einem Plan (z.B. einer Landkarte, einem Stadtplan, einem Gebäudeplan oder einer schematischen Standortdarstellung) dargestellt werden.

"Welcome Voice Procedure" (WVP): Beim ersten Öffnen der Anwendung wird eine sprachunterstützte Einführung durch die Einrichtungsphase bereitgestellt.

Durch ein wahlweises Anbieten der unterschiedlichen Betriebsmodi kann das erfindungsgemäße Verfahren an unterschiedliche Benutzergruppen und unterschiedliche Preiskategorien angepasst werden.
ausführende Kommunikationseinheit (1)
weitere Kommunikationseinheit (2)
Kommunikationsgruppe (3)
Aktivierungselement (4)
Benutzerschnittstelle (5)
Mikrofon (6)
Audioausgabe (7)
Lautstärkenregler 8
Headset 9
Bluetoothverbindung 10
WLAN-Netzwerk 11
Router 12
Funkstation 13
Internet 14

## Patentansprüche

1. Verfahren zur Bereitstellung selektiv wählbarer Echtzeit-Audioverbindungen zwischen einer ausführenden Kommunikationseinheit (1) und einer Anzahl an weiteren Kommunikationseinheiten (2) in einer Kommunikationsgruppe (3), wobei zumindest die ausführende Kommunikationseinheit (1) eine Anzahl an durch Benutzerauswahl aktivierbaren Aktivierungselementen (4) zur selektiven Aktivierung von Echtzeit-Audioverbindungen zwischen der ausführenden Kommunikationseinheit (1) und zumindest einer weiteren Kommunikationseinheit (2), die dem jeweiligen Aktivierungselement (4) zugeordneten ist, vorsieht, und wobei die ausführende Kommunikationseinheit (1) die folgenden Schritte ausführt:
- Herstellen einer Verbindung mit einem Datennetzwerk;
- Ermitteln von weiteren Kommunikationseinheiten (2), die sich im Bereich des Datennetzwerks befinden, und die zum Aufbau einer Echtzeit-Audioverbindung fähig sind;
- Bilden einer Kommunikationsgruppe (3), die die ausführende Kommunikationseinheit (1) und zumindest eine der ermittelten weiteren Kommunikationseinheiten (2) umfasst;
- Festlegen einer Adressenzuordnung für einen Audiokanal über das Datennetzwerk zu der zumindest einen fernen Kommunikationseinheit;
- Bereitstellen eines Aktivierungselements (4) an einer Benutzerschnittstelle (5) der ausführenden Kommunikationseinheit (1), welches zumindest der einen fernen Kommunikationseinheit zugeordnet ist;
- Empfangen einer Benutzereingabe zur Aktivierung des Audiokanals durch Auswählen des Aktivierungselements (4); und
- Öffnen des Audiokanals über das Datennetzwerk unter Verwendung der Adresszuordnung und geöffnet Halten des Audiokanals, so lange das Aktivierungselement (4) aktiviert ist;
**dadurch gekennzeichnet, dass** das Verfahren ein Intercom-System aufbaut, bei dem die gesamte Kommunikation über ein Datennetz ohne Zwischenschaltung eines Servers funktionsfähig ist.

2. Verfahren nach Anspruch 1, **dadurch gekennzeichnet, dass** die Kommunikationsgruppe (3) für die jeweilige ausführende Kommunikationseinheit definiert ist.

3. Verfahren nach einem der Ansprüche 1 bis 2, **dadurch gekennzeichnet, dass** das Öffnen des Audiokanals unmittelbar beim Aktiveren der Echtzeit-Audioübertragung erfolgt.

4. Verfahren nach einem der Ansprüche 1 bis 3, **dadurch gekennzeichnet, dass** die Adressenzuordnung exklusiv zugewiesene Ports beinhaltet.

5. Verfahren nach einem der Ansprüche 1 bis 4, **dadurch gekennzeichnet, dass** Aktivierungselemente (4) für unterschiedliche Aktivierungsarten aktivierbar sind, umfassend eine beliebige Kombination aus einer aktiven, passiven, einseitigen und/oder gegenseitigen Audiokommunikation, wobei die aktuelle Aktivierungsart und/oder der aktuelle Status der Kommunikationsverbindung durch eine unterschiedliche Gestaltung des Aktivierungselements (4) angezeigt wird.

6. Verfahren nach einem der Ansprüche 1 bis 5, **dadurch gekennzeichnet, dass** alle im Datennetzwerk ermittelten Kommunikationseinheiten automatisch zur Kommunikationsgruppe (3) zusammengefasst werden.

7. Verfahren nach einem der Ansprüche 1 bis 6, **dadurch gekennzeichnet, dass** der Schritt des Bildens einer Kommunikationsgruppe (3) das Definieren von Untergruppen und/oder das Zuweisen von Berechtigungen aufweist.

8. Verfahren nach Anspruch 7, **dadurch gekennzeichnet, dass** zumindest ein Aktivierungselement (4) zu Aktivierung mehrerer ferner Kommunikationseinheiten gleichzeitig vorgesehen ist.

9. Verfahren nach einem der Ansprüche 1 bis 8, **dadurch gekennzeichnet, dass** eine Kommunikationsverbindung zusätzlich zur Übertragung von Daten aktivierbar ist.

10. Verfahren nach einem der Ansprüche 1 bis 9, **dadurch gekennzeichnet, dass** die Kommunikationsverbindung eine Sprachaktivierung aufweist.

11. Verfahren nach einem der Ansprüche 1 bis 10, **dadurch gekennzeichnet, dass** die ausführende und/oder die ferne Kommunikationseinheit ein ortsfestes oder mobiles Benutzergerät ist, und insbesondere ausgewählt ist aus Smartphones, Mobiltelefonen, Funkgeräten, Funk-Headsets, Tablet-PCs, Personalcomputern, zur Audiokommunikation fähigen Funkmeldeempfängern, für das Verfahren spezifisch ausgebildeten Vorrichtungen oder ähnlichen Geräten.

12. Verfahren nach einem der Ansprüche 1 bis 11, **dadurch gekennzeichnet, dass** die Audioübertragung verschlüsselt erfolgt.

13. Verfahren nach einem der Ansprüche 1 bis 12, **dadurch gekennzeichnet, dass** die von der ausführenden Kommunikationseinheit (1) ausgeführten Verfahrensschritte in einem auf unterschiedlichen Endgeräten lauffähigen Computerprogrammprodukt definiert sind.

14. Echtzeit-Audiokommunikationssystem mit einer Vielzahl an Kommunikationseinheiten (1,2a,2b...), welche jeweils zumindest eine Kommunikationsschnittstelle zur Verbindung mit dem Datennetzwerk und eine Audioausgabe (7) aufweisen, **dadurch gekennzeichnet, dass** zumindest eine der Kommunikationseinheiten(1) zur Durchführung eines Verfahrens gemäß einem der Ansprüche 1 bis 13 ausgebildet ist.

15. Computerprogrammprodukt, in dem die Verfahrensschritte gemäß einem der Ansprüche 1 bis 13 definiert sind, und das auf unterschiedlichen Endgeräten lauffähig ist.

## Claims

1. A method for providing selectable real time audio connections between an executing communication unit (1) and a plurality of further communication units (2) in a communication group (3), wherein at least the executing communication unit (1) provides a plurality of activation elements (4) which can be activated by user selection for selective activation of real time audio connections between the executing communication unit (1) and at least one further communication unit (2) associated with the respective activation element (4), and wherein the executing communication unit (1) executes the following steps:
- establishing a connection to a data network;
- determining further communication units (2) which are located in the range of the data network and which are capable of establishing a real time audio connection;
- forming a communication group (3) which comprises the executing communication unit (1) and at least one of the determined further communication units (2);
- defining an address assignment for an audio channel via the data network to the at least one remote communication unit;
- providing an activation element (4), which is assigned at least to the one remote communication unit, on a user interface (5) of the executing communication unit (1);
- receiving a user input for activation of the audio channel by selecting the activating element (4); and
- opening the audio channel via the data network using the address assignment and keeping the audio channel open as long as the activation element (4) is activated;
**characterized in that** the method sets up an intercom system in which the entire communication can take place via a data network without the interposition of a server.

2. The method according to claim 1, **characterized in that** the communication group (3) is defined for the respective executing communication unit.

3. The method according to one of claims 1 to 2, **characterized in that** the opening of the audio channel takes place immediately upon activation of the real time audio transmission.

4. The method according to one of claims 1 to 3, **characterized in that** the address assignment exclusively contains allocated ports.

5. The method according to one of claims 1 to 4, **characterized in that** activation elements (4) for different types of activation can be activated, comprising any combination of an active, passive, one-way and/or two-way audio communication, wherein the current type of activation and/or the current status of the communication connection is indicated by a different configuration of the activation element (4).

6. The method according to one of claims 1 to 5, **characterized in that** all communication units determined in the data network are automatically combined into the communication group (5).

7. The method according to one of claims 1 to 6, **characterized in that** the step of forming a communication group (3) includes defining sub-groups and/or allocating entitlements.

8. The method according to claim 7, **characterized in that** at least one activation element (4) is simultaneously provided for activation of a plurality of further communication units.

9. The method according to one of claims 1 to 8, **characterized in that** a communication connection can be activated in addition to the transmission of data.

10. The method according to one of claims 1 to 9, **characterized in that** the communication connection has voice activation.

11. The method according to one of claims 1 to 10, **characterized in that** the executing communication unit and/or the remote communication unit is a stationary or mobile user device, and in particular is selected from smartphones, mobile telephones, wireless devices, wireless headsets, tablet PCs, personal computers, pagers capable of audio communication, devices designed specifically for the method or similar equipment.

12. The method according to one of claims 1 to 11, **characterized in that** the audio transmission is encrypted.

13. The method according to one of claims 1 to 12, **characterized in that** the method steps executed by the executing communication unit (1) are defined in a computer program product which can run on different terminals.

14. A real time audio communication system with a plurality of communication units (1, 2a, 2b...) which in each case have at least one communications interface for connection to the data network and an audio output (7), **characterized in that** at least one of the communication units (1) is designed for carrying out a method according to one of claims 1 to 13.

15. A computer program product in which the method steps according to one of claims 1 to 13 are defined, and which can run on different terminals.

## Revendications

1. Procédé d'établissement de connexions audio en temps réel sélectionnables entre une unité de communication exécutive (1) et un certain nombre d'autres unités de communication (2) dans un groupe de communication (3), au moins l'unité de communication exécutive (1) prévoyant un certain nombre d'éléments d'activation (4) activable par sélection de l'utilisateur pour activer sélectivement des connexions audio en temps réel entre l'unité de communication exécutive (1) et au moins une autre unité de communication (2) qui est associée à l'élément d'activation (4) respectif et l'unité de communication exécutive (1) exécutant les étapes suivantes consistant à :
- établir une connexion avec un réseau de données ;
- déterminer d'autres unités de communication (2) qui se trouvent dans la zone du réseau de données et qui sont capables d'établir une connexion audio en temps réel ;
- former un groupe de communication (3) qui comprend l'unité de communication exécutive (1) et au moins une des autres unités de communication (2) déterminées ;
- définir une association d'adresses d'un canal audio via le réseau de données à l'au moins une unité de communication distante ;
- produire un élément d'activation (4) sur une interface utilisateur (5) de l'unité de communication exécutive (1), lequel élément d'activation est associé au moins à l'une des unités de communication distantes ;
- recevoir une donnée d'entrée d'utilisateur pour activer le canal audio par sélection de l'élément d'activation (4) ; et
- ouvrir le canal audio via le réseau de données à l'aide de l'association d'adresses et maintenir le canal audio ouvert tant que l'élément d'activation (4) est activé ;
**caractérisé en ce que**
le procédé élabore un système d'interphone dans lequel toute la communication via un réseau de données est opérationnelle sans interposition d'un serveur.

2. Procédé selon la revendication 1, **caractérisé en ce que** le groupe de communication (3) est défini pour l'unité de communication exécutive respective.

3. Procédé selon l'une des revendications 1 à 2, **caractérisé en ce que** l'ouverture du canal audio est effectué directement lors de l'activation la transmission audio en temps réel.

4. Procédé selon l'une des revendications 1 à 3, **caractérisé en ce que** l'association d'adresses comprend des ports attribués de manière exclusive.

5. Procédé selon l'une des revendications 1 à 4, **caractérisé en ce que** les éléments d'activation (4) peuvent être activés pour différents types d'activation, comprenant une combinaison quelconque d'une communication audio active, passive, unidirectionnelle et/ou bidirectionnelle, le type d'activation actuel et/ou l'état actuel de la liaison de communication étant indiqué par une conception différente de l'élément d'activation (4).

6. Procédé selon l'une des revendications 1 à 5, **caractérisé en ce que** toutes les unités de communication déterminées dans le réseau de données sont regroupées automatiquement pour former le groupe de communication (3).

7. Procédé selon l'une des revendications 1 à 6, **caractérisé en ce que** l'étape consistant à former un groupe de communication (3) comprend la définition de sous-groupes et/ou l'attribution d'autorisations.

8. Procédé selon la revendication 7, **caractérisé en ce qu'**au moins un élément d'activation (4) est prévu pour activer une pluralité d'autres unités de communication distantes en même temps.

9. Procédé selon l'une des revendications 1 à 8, **caractérisé en ce qu'**une liaison de communication peut en outre être activée pour transmettre des données.

10. Procédé selon l'une des revendications 1 à 9, **caractérisé en ce que** la liaison de communication comprend une activation vocale.

11. Procédé selon l'une des revendications 1 à 10, **caractérisé en ce que** l'unité de communication exécutive et/ou distante est un équipement d'utilisateur fixe ou mobile, et est en particulier choisi parmi les smartphones, les téléphones mobiles, les équipements radioélectriques, les casques sans fil, les tablettes PC, les ordinateurs personnels, les récepteurs de radiomessagerie capables de communication audio, les dispositifs spécialement conçus pour le procédé ou des équipements similaires.

12. Procédé selon l'une des revendications 1 à 11, **caractérisé en ce que** la transmission audio est cryptée.

13. Procédé selon l'une des revendications 1 à 12, **caractérisé en ce que** les étapes du procédé exécutés par l'unité de communication exécutive (1) sont définies dans un logiciel exécutable sur différents terminaux.

14. Système de communications audio en temps réel pourvu d'une pluralité d'unités de communication (1, 2a, 2b,...), qui comportent chacune au moins une interface de communication destinée à se connecter au réseau de données et une sortie audio (7), **caractérisé en ce qu'**au moins une des unités de communication (1) est conçue pour mettre en oeuvre un procédé selon l'une des revendications 1 à 13.

15. Logiciel, dans lequel les étapes de procédé sont définies selon l'une des revendications 1 à 13, et qui est exécutable sur différents terminaux.
